# FASCICULE DE BREVET EUROPEEN

(11) **EP 3 508 306 B1**
(45) Date de publication et mention de la délivrance du brevet: **28.10.2020**
(21) Numéro de dépôt: 18208200.8
(22) Date de dépôt: 26.11.2018
(51) Int. Cl.: B24B 57/00, B24D 3/28

(54) **PROCÉDÉ POUR RÉCUPÉRER LES ÉLÉMENTS ABRASIFS CONTENUS DANS UN MATÉRIAU À LIANT RÉSINE ET UTILISATION DESDITS ÉLÉMENTS AINSI RÉCUPÉRÉS**
VERFAHREN ZUR RÜCKGEWINNUNG DER ABRIEBELEMENTE, DIE IN EINEM HARZBINDEMITTEL-MATERIAL ENTHALTEN SIND, UND VERWENDUNG DIESER SO RÜCKGEWONNENEN ELEMENTE
METHOD FOR RECOVERING THE ABRASIVE ELEMENTS CONTAINED IN A RESIN BINDER MATERIAL AND USE OF THE ELEMENTS THUS RECOVERED

(30) Priorité: 28.11.2017 FR 1761260
(43) Date de publication de la demande: 10.07.2019
(73) Titulaire: Extracthive, 30150 Saint-Genies-De-Comolas (FR); Euralox, 13080 Luynes (FR)
(72) Inventeur: GOETTMANN, Frédéric, 84350 COURTHEZON (FR); RICOUX, Quentin, 84860 Caderousse (FR)
(74) Mandataire: Brevalex

(56) Documents cités:
- WO-A1-2014/042494
- DE-A1- 19 635 941

## Description

### DOMAINE TECHNIQUE

La présente invention concerne le domaine du recyclage des matériaux abrasifs comprenant des éléments abrasifs et une résine et notamment des matériaux abrasifs agglomérés et des matériaux abrasifs appliqués.

Plus particulièrement, la présente invention propose un procédé permettant de récupérer les éléments abrasifs à partir d'un matériau abrasif comprenant lesdits éléments abrasifs et une résine présentant au moins un groupement hydroxyle phénolique (voir par exemple DE 196 35 941 A1).

La présente invention concerne également l'utilisation des éléments abrasifs ainsi récupérés notamment pour préparer de nouveaux matériaux abrasifs comprenant des éléments abrasifs et une résine.

### ÉTAT DE LA TECHNIQUE ANTÉRIEURE

La fabrication et l'utilisation d'abrasifs à liant résine tels que les meules abrasives, les disques de coupe ou les abrasifs appliqués conduisent à la production de déchets tels que les rebus de fabrication, les chutes de découpe et les meules usagées. Ceux-ci sont constitués de minéraux, faisant office de charges abrasives, liés par des résines, le tout étant éventuellement appliqué sur des supports et/ou renforcé par des fibres minérales ou des âmes métalliques. Les charges abrasives peuvent être des corindons bruns, blancs, et violet, de la bauxite et de l'alumine frittée ou encore des grains d'alumine extrudés.

Le seul rebus de fabrication de meules abrasives représente, au niveau européen, un gisement annuel de l'ordre de 25 000 tonnes. Les charges abrasives constituent l'essentiel de la valeur des meules puisque leur valeur, à l'état neuf, varie de 500 € la tonne pour les corindons bruns à 40 000 € la tonne pour des grains sol-gel. Le seul marché du recyclage des rebus de fabrication peut donc être estimé à environ 12,5 millions d'euros par an. Outre l'aspect économique, l'enlèvement et le recyclage des meules abrasives usagées devient également un enjeu important pour les producteurs du point de vue réglementaire depuis la mise en place du principe de la « responsabilité étendue du producteur » et du point de vue commercial puisque l'exutoire des meules en fin de vie devient un critère déterminant pour l'obtention de nouveaux marchés.

Les différentes voies de recyclage envisagées jusqu'à présent font intervenir des procédés de traitement mécanique (broyage), thermique (pyrolyse) et/ou biologique (biolixiviation).

Les procédés mécaniques consistent à broyer les meules afin d'obtenir des agglomérats constitués de minéraux abrasifs enrobés de résine. Cette approche permet un réemploi des abrasifs dans des applications à plus faible valeur ajoutée, comme, par exemple, des abrasifs pour les procédés de sablage ou encore comme matière première pour le cœur des meules lors de la fabrication d'autres matériaux abrasifs **[1].** Un autre exemple de down-cycling est la réutilisation de la partie non active dans le meulage d'un premier matériau abrasif pour la fabrication de la partie non abrasive d'un nouveau matériau abrasif **[2]** ou la réutilisation de la partie abrasive d'un premier matériau abrasif pour la fabrication de la partie abrasive d'un nouveau matériau abrasif **[3].**

Les procédés thermiques utilisés pour le recyclage de meules abrasives consistent à oxyder thermiquement la résine liant les grains abrasifs. L'approche thermique nécessite de trouver des compromis afin d'avoir des températures suffisamment élevées pour permettre la dégradation de la résine mais pour lesquelles les charges ne sont pas dégradées. Des températures de 600°C sont généralement préconisées engendrant des coûts de traitement estimés à environ 350 €/t. De plus, les grains abrasifs récupérés après de tels procédés sont pollués par la présence de coke ce qui empêche leur réemploi pour la fabrication d'abrasifs massifs ou appliqués.

Ainsi, les procédés de recyclage d'abrasifs à liant résine industrialisés sont très imparfaits, si bien que 90% des déchets sont actuellement mis en décharge ou enfouis pouvant causer des risques non négligeables de lixiviation de la résine et de contamination des sols par le phénol lorsque des résines de type phénolique sont utilisées comme liant.

Les inventeurs se sont donc fixé pour but de proposer un procédé facile à mettre en œuvre, industrialisable et permettant de récupérer les éléments abrasifs à partir d'un matériau abrasif comprenant lesdits éléments abrasifs dans une résine et ce, de façon efficace et sans endommager ces éléments en vue d'une utilisation ultérieure de ces derniers notamment dans de nouveaux matériaux abrasifs.

### EXPOSÉ DE L'INVENTION

La présente invention permet de résoudre les problèmes techniques tels que précédemment définis et d'atteindre le but que se sont fixé les inventeurs.

En effet, les travaux des inventeurs ont permis de mettre au point un procédé industrialisable permettant d'obtenir des éléments abrasifs récupérés à partir de matériaux abrasifs contenant ces derniers dans une résine à base de phénol.

Plus particulièrement le procédé mis au point par les inventeurs implique l'attaque de la partie résine à base de phénol des matériaux abrasifs par l'acide nitrique. Sans vouloir être tenu à une quelconque théorie, les inventeurs pensent que l'acide nitrique oxyde la résine à base de phénol et mène à la formation de fonctions nitroso très instables qui se décomposent en générant des oxydes d'azote et des radicaux également instables. Dans le cas de la bakélite et, de façon générale, des composés polyphénoliques, on peut schématiser la réaction de nitration de la manière suivante :

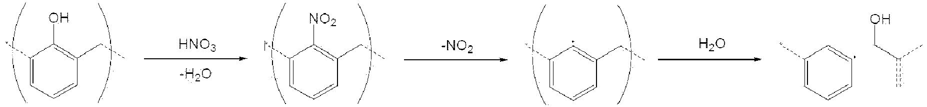

Cette réaction conduit, d'une part, à l'oxydation et à la dépolymérisation de la résine et, d'autre part, à la réduction de l'acide nitrique.

A noter que la qualité des éléments abrasifs obtenus suite au procédé de récupération selon l'invention est telle qu'ils peuvent être utilisés pour préparer de nouveaux matériaux abrasifs ayant des propriétés comparables à celles de matériaux abrasifs préparés à partir d'éléments abrasifs neufs.

Plus particulièrement, la présente invention concerne un procédé de récupération de tout ou partie des éléments abrasifs d'un matériau abrasif dans lequel lesdits éléments abrasifs sont maintenus dans une résine présentant au moins un groupement hydroxyle phénolique, ledit procédé comprenant les étapes consistant à :
a) mettre en contact ledit matériau abrasif avec une solution aqueuse nitrique (S₁), moyennant quoi une solution aqueuse nitrique (S₂) contenant des éléments abrasifs et des résidus issus de la dégradation de ladite résine est obtenue ; puis
b) séparer les éléments abrasifs de la solution aqueuse nitrique (S₂) obtenue suite à ladite étape (a).

Par « matériau abrasif », on entend, dans le cadre de la présente invention, aussi bien les matériaux abrasifs agglomérés que les matériaux abrasifs appliqués.

Par « matériau abrasif aggloméré » ou « abrasif aggloméré », on entend un matériau, poreux ou non poreux, comprenant un mélange solide d'éléments ou grains abrasifs et d'un liant ou agglomérant dans lequel les grains sont régulièrement répartis et maintenus.

Par « matériau abrasif appliqué » ou « abrasif appliqué », on entend un matériau comprenant un support sur lequel est disposée une couche d'éléments ou grains abrasifs et solidaires du support grâce à un liant ou agglomérant. Le support dans un tel matériau abrasif peut être du papier, une toile, une combinaison papier-toile, une fibre, un non tissé ou des mailles. Plus particulièrement, un matériau abrasif appliqué est constitué d'un support sur lequel est disposée une couche d'éléments ou grains abrasifs et solidaires du support grâce à deux couches de liant. En effet, une première couche de liant permet de déposer les éléments ou grains abrasifs sur le support, assurant l'adhérence de base de ces éléments ou grains et la deuxième couche de liant ancre ces derniers. La nature chimique du liant mis en œuvre pour la première couche et la deuxième couche peut être identique ou différente.

Le matériau abrasif auquel est appliqué le procédé de la présente invention peut présenter une taille et une forme quelconques. En particulier, la taille de ce matériau abrasif peut varier de quelques millimètres à plusieurs mètres. Typiquement, ce matériau abrasif est choisi parmi les meules de rectification des bagues de roulement miniatures, les meules sur tige, les meules pour touret, les meules de fonderie, les meules de tronçonnage, les meules de défibrage du bois, le papier de verre, les disques abrasifs comme les disques abrasifs pour ponceuses et les bandes abrasives.

Dans le cadre de la présente invention, le liant ou agglomérant du matériau abrasif auquel est appliqué le procédé de la présente invention est un composé organique (co)polymère i.e. une résine. Dans ce cas et lorsque le matériau abrasif est du type abrasif aggloméré, on parle d'« abrasif aggloméré résinoïde ». Dans le cas d'un matériau abrasif appliqué, au moins un des deux liants est une résine et avantageusement les deux liants sont des résines.

A noter que la résine du matériau abrasif auquel est appliqué le procédé selon l'invention est une résine présentant au moins un groupement hydroxyle phénolique. Dans le cas d'un matériau abrasif appliqué, au moins un des deux liants est une résine présentant au moins un groupement hydroxyle phénolique et avantageusement les deux liants sont des résines présentant au moins un groupement hydroxyle phénolique.

Toute résine, naturelle ou synthétique, présentant au moins un groupement hydroxyle phénolique i.e. toute résine, naturelle ou synthétique, à base de phénol éventuellement substitué est utilisable dans le cadre de la présente invention.

Avantageusement, la résine du matériau abrasif auquel est appliqué le procédé selon l'invention est une résine phénol-formaldéhyde, une résine crésol-formaldéhyde ou une résine xylénol-formaldéhyde. Plus particulièrement, la résine du matériau abrasif auquel est appliqué le procédé selon l'invention est une résine phénol-formaldéhyde i.e. un phénoplaste.

Les éléments abrasifs que l'on souhaite récupérer suite à la mise en œuvre du procédé selon l'invention se présentent sous forme de grains. La taille médiane de ces grains est comprise entre 100 µm et 5 mm et notamment entre 150 µm et 4 mm. Tous les éléments abrasifs habituellement utilisés dans le cadre des matériaux abrasifs tels que précédemment définis sont utilisables dans le cadre de la présente invention.

Les éléments abrasifs que l'on souhaite récupérer suite à la mise en œuvre du procédé selon l'invention peuvent être des abrasifs naturels comme du diamant, du grenat, du corindon naturel ou de l'émeri.

Pour rappel, le corindon naturel est une alumine cristallisée de formule Al₂O₃ aussi notée α-Al₂O₃ comprenant entre 6 et 10% d'impuretés du type fer, titane, chrome, manganèse, nickel, vanadium et/ou silicium. L'émeri est composé d'une alumine cristallisée (35 à 70%), de silice et d'oxyde de fer.

Les éléments abrasifs que l'on souhaite récupérer suite à la mise en œuvre du procédé selon l'invention peuvent être des abrasifs de synthèse comme l'alumine (ou oxyde d'aluminium), la zircone (ou dioxyde de zirconium ou oxyde de zirconium(IV)), des corindons bruns (ou alumine à 95%), des corindons blancs (ou alumine à 99%), des corindons roses, des corindons violets, des alumines monocristallines, des alumines à la zircone, le carbure de silicium et la bauxite frittée.

Pour rappel, le corindon brun est obtenu en traitant de la bauxite (minerai notamment composé d'alumine, d'hématite et de titane) à une température supérieure à 2000°C dans un four à arc électrique en présence de fondants et d'un réducteur de type coke. Le corindon blanc est obtenu selon le même procédé que le procédé d'obtention du corindon brun mais en utilisant comme matériau de départ de l'alumine amorphe pure élaborée chimiquement. Les corindons rose et violet sont obtenus selon le même procédé que le procédé d'obtention du corindon blanc mais en ajoutant à l'alumine de l'oxyde de chrome, les corindons roses et violets ne différant que par leur teneur en oxyde de chrome. A noter que tous les corindons sont cristallins. Les alumines à la zircone sont préparées par fusion d'alumine et de zircone dans des proportions variables. Le carbure de silicium mis en œuvre dans le cadre de la présente invention est la forme cristalline obtenue dans un four électrique par réduction, à une température d'environ 2200°C (2200°C ± 100°C), de la silice par du carbone sous forme de coke de pétrole pulvérisé. La bauxite frittée a une couleur rouge brique à cause de sa teneur élevée en hématite (>10%) et est opaque.

Les éléments abrasifs que l'on souhaite récupérer suite à la mise en œuvre du procédé selon l'invention peuvent être un mélange d'au moins deux abrasifs naturels tels que précédemment définis, d'au moins deux abrasifs de synthèse tels que précédemment définis ou encore un mélange d'au moins un abrasif naturel tel que précédemment défini et d'au moins un abrasif de synthèse tel que précédemment défini.

Avantageusement, les éléments abrasifs que l'on souhaite récupérer suite à la mise en œuvre du procédé selon l'invention sont choisis dans le groupe constitué par l'alumine (ou oxyde d'aluminium), les corindons bruns, les corindons blancs, les corindons violets, la zircone (ou dioxyde de zirconium ou oxyde de zirconium(IV)), le diamant, le carbure de silicium, la bauxite frittée et leurs mélanges.

Comme précédemment expliqué, l'étape (a) du procédé selon la présente invention utilise une solution particulière pour le traitement de la résine présentant au moins un groupement hydroxyle phénolique. En effet, cette dernière consiste en une solution aqueuse nitrique (S₁).

Avantageusement, la solution aqueuse nitrique (S₁) mise en œuvre lors de l'étape (a) du procédé selon l'invention contient au moins 20% en masse d'acide nitrique par rapport à la masse totale de ladite solution aqueuse nitrique (S₁).

Dans un premier mode de réalisation, la solution aqueuse nitrique (S₁) ne contient aucun autre acide que de l'acide nitrique. Dans ce premier mode de réalisation, la teneur en acide nitrique dans la solution aqueuse nitrique (S₁) est avantageusement supérieure ou égale à 30% en masse par rapport à la masse totale de ladite solution aqueuse nitrique (S₁). Dans certaines mises en œuvre de ce premier mode de réalisation, l'acide nitrique dans la solution aqueuse nitrique (S₁) peut être supérieure ou égale à 40% en masse, notamment supérieure ou égale à 50% en masse et, en particulier, supérieure ou égale à 60% en masse par rapport à la masse totale de ladite solution aqueuse nitrique (S₁).

Dans un second mode de réalisation, la solution aqueuse nitrique (S₁) peut contenir, en plus de l'acide nitrique, au moins un autre acide notamment choisi dans le groupe constitué par l'acide chlorhydrique et l'acide sulfurique. Avantageusement, cet autre acide est de l'acide sulfurique. Plus particulièrement, lorsque de l'acide sulfurique est présent dans la solution aqueuse nitrique (S₁) en plus de l'acide nitrique, cette dernière contient au moins 30% en masse d'acide sulfurique par rapport à la masse totale de ladite solution aqueuse nitrique (S₁).

Quel que soit le mode de réalisation, l'homme du métier connaît différentes façons de préparer une telle solution aqueuse nitrique (S₁) soit en diluant ou en mélangeant des compositions commerciales existantes, soit en les préparant de façon extemporanée.

Généralement, lors de l'étape (a) du procédé selon la présente invention, lorsque le matériau abrasif à traiter est du type aggloméré, le ratio « masse d'acide nitrique »/« masse de matériau abrasif » est supérieur ou égal à 1, notamment supérieur ou égal à 1,1 et, en particulier, supérieur ou égal à 1,2. Lorsque le matériau abrasif à traiter est du type appliqué, le ratio « masse d'acide nitrique »/« masse de matériau abrasif » est inférieur à 1, notamment inférieur ou égal à 0,85 et, en particulier, inférieur ou égal à 0,7.

Avantageusement, lors de l'étape (a) du procédé selon la présente invention, la mise en contact est réalisée à une température comprise entre la température ambiante et 150°C. Par « température ambiante », on entend une température comprise entre 17°C et 27°C.

Plus particulièrement, lorsque la température de mise en contact est supérieure à la température ambiante, l'étape (a) du procédé selon la présente invention peut comprendre les sous-étapes successives suivantes :
a₁) préparer une solution aqueuse nitrique (S₁) telle que précédemment définie et présentant une température T supérieure à la température ambiante et inférieure ou égale à 150°C ; et
a₂) mettre en contact le matériau abrasif avec la solution préparée à l'étape (a₁), ladite mise en contact étant effectuée à ladite température T.

En variante, lorsque la température de mise en contact est supérieure à la température ambiante, l'étape (a) du procédé selon la présente invention peut comprendre les sous-étapes successives suivantes :
a₁') mettre en contact le matériau abrasif avec la solution aqueuse nitrique (S₁) telle que précédemment définie ; et
a₂') porter la solution préparée à l'étape (a₁) (i.e. la solution aqueuse nitrique (S1) dans laquelle se trouve le matériau abrasif) à une température T supérieure à la température ambiante et inférieure ou égale à 150°C.

La solution lors de l'étape (a₁) ou (a₂') est portée à la température T appelée « température de traitement ». Cette dernière est supposée être atteinte lorsque la mesure de la température de la solution lors de l'étape (a₁) ou (a₂') effectuée à l'aide d'un moyen de métrologie adapté comme, par exemple un thermomètre, conduit à une valeur proche de la température désirée pendant 15 min, aux incertitudes de mesure près.

Dans le procédé selon l'invention, la mise en contact entre le matériau abrasif et la solution aqueuse nitrique (S₁) peut se faire par tout moyen permettant un traitement uniforme ou non du matériau abrasif par la solution aqueuse nitrique (S₁) telle que précédemment définie.

Cette mise en contact consiste typiquement à plonger et à maintenir le matériau abrasif dans la solution aqueuse nitrique (S₁). Lors de la mise en contact, la solution aqueuse nitrique (S₁) peut être soumise à une agitation mécanique, par ultrasons ou par circulation de la solution aqueuse nitrique. A cet effet, un malaxeur, un agitateur, un système à ultrasons, un homogénéisateur ou une pompe de recirculation peuvent être utilisés et ce, dans le but de maintenir l'homogénéité de la solution aqueuse nitrique (S₁) et d'éviter le dépôt ou le maintien de produits résultant de la dégradation de la résine au niveau de la surface du matériau abrasif.

Dans le procédé selon la présente invention, la mise en contact entre le matériau abrasif et la solution aqueuse nitrique (S₁) présente une durée supérieure ou égale à 15 min, notamment supérieure ou égale à 30 min et, en particulier, supérieure ou égale à 1 h. A noter qu'il est facile pour l'homme du métier de déterminer visuellement la durée optimale de mise en contact. En effet, en fonction de l'aspect de la solution aqueuse nitrique (S₁) i.e. présence de matériau abrasif ou d'éléments abrasifs dispersés dans cette solution, l'homme du métier sait si la mise en contact peut être stoppée ou au contraire poursuivie.

Dans le cadre du procédé selon l'invention et plus particulièrement durant l'étape de mise en contact, il peut être nécessaire de compléter le volume de la solution aqueuse nitrique (S₁) en permanence avec de l'eau comme de l'eau ultra-pure ou déminéralisée ou de l'acide nitrique, afin de compenser l'évaporation induite par la température de traitement T et la réduction de l'acide nitrique en oxydes d'azote. Par ailleurs, tout dispositif permettant de maintenir un volume constant de la solution aqueuse nitrique (S₁) par condensation des vapeurs notamment (montage au reflux) peut être utilisé avantageusement.

De plus, dans le cadre du procédé selon l'invention et plus particulièrement durant l'étape de mise en contact, il est nécessaire de maintenir la température de la solution aqueuse nitrique (S₁) à la température de traitement T telle que précédemment définie. A cet effet, la mise en contact peut être réalisée en présence d'un élément chauffant et de moyens de régulation de température aptes à maintenir ledit élément chauffant à une température de consigne, choisie de façon à ce que, lorsque ladite température de consigne est obtenue et maintenue, la température de la solution aqueuse nitrique (S₁) est maintenue à la température de traitement T.

A la fin de l'étape (a) du procédé selon l'invention, on obtient une solution aqueuse nitrique (S₂) contenant des éléments abrasifs et des résidus issus de la dégradation de ladite résine. La solution aqueuse nitrique (S₂) peut être considérée comme une solution d'acide usé puisqu'il y subsiste une acidité libre. Avantageusement, la solution aqueuse nitrique (S₂) comprend, en plus de l'acide nitrique et éventuellement au moins un autre acide tel que de l'acide sulfurique, des oxydes d'azote, des composés organiques issus de la dégradation des résines et des composés minéraux issus de la dégradation des éléments de renfort éventuellement présents dans le matériau abrasif à traiter.

Toute technique permettant de séparer les éléments abrasifs obtenus suite à l'étape (a) de la solution (S₂) peut être mise en œuvre lors de l'étape (b) du procédé selon l'invention. Avantageusement, l'étape de séparation lors de l'étape (b) comprend une ou plusieurs étapes, identiques ou différentes, de séparation solide/liquide telles que décantation, filtration et/ou centrifugation.

Préalablement à la mise en œuvre du procédé selon la présente invention et donc préalablement à l'étape (a) de ce dernier, le matériau abrasif n'a subi aucun traitement particulier. En variante, le matériau abrasif auquel est appliqué le procédé selon l'invention peut avoir subi, préalablement à la mise en œuvre de ce procédé et donc préalablement à l'étape (a) de ce dernier, un traitement du type broyage ou concassage. Un tel traitement permet de réduire un matériau abrasif massif en fragments de plus petite taille, typiquement inférieure ou égale à 10 cm et notamment inférieure ou égale à 5 cm, et ce, afin de faciliter l'attaque de ce matériau par l'acide nitrique.

Suite à la mise en œuvre du procédé selon la présente invention et donc suite à l'étape (b) de ce dernier, les éléments abrasifs séparés de la solution aqueuse nitrique (S₂) peuvent être recyclés notamment pour préparer de nouveaux matériaux abrasifs. De même, la solution d'acide nitrique (S₂) obtenue suite à l'étape (b) i.e. la solution d'acide nitrique (S₂) telle que précédemment définie et dépourvue des éléments abrasifs peut être soumise à une étape supplémentaire de recyclage.

Toute technique connue de l'homme du métier pour recycler une solution contenant des acides usés, des oxydes d'azote, des composés organiques issus de la dégradation des résines et des composés minéraux issus de la dégradation des matériaux de renfort est utilisable dans le cadre de la présente invention. Ce recyclage permet notamment de régénérer les acides initialement contenus dans la solution aqueuse nitrique (S₁) et de précipiter, sous forme de résidus solides, les composés organiques et les composés minéraux. Un tel recyclage comprend une ou plusieurs étapes, identiques ou différentes, de type précipitation, oxydation, absorption ou distillation.

Un exemple particulier de procédé utilisé pour recycler la solution d'acide nitrique (S₂) obtenue suite à l'étape (b) consiste en (i) une précipitation (par ajout de sulfate par exemple), (ii) une oxydation des composés organiques résiduels à 150°C et (iii) distillation de l'acide nitrique dans l'acide sulfurique, les oxydes d'azote étant absorbés dans des colonnes pour refaire de l'acide nitrique 50% avant d'être reconcentré par distillation.

La présente invention concerne également un procédé de préparation d'un matériau abrasif aggloméré. A noter que le liant d'un tel abrasif aggloméré peut être tout liant utilisé dans le cadre des matériaux abrasifs et non plus exclusivement une résine de type phénolique. Ainsi, ce liant peut être un agglomérant minéral vitrifiable, un agglomérant minéral magnésien, un agglomérant organique résinoïde et un agglomérant organique caoutchouc. La résine mise en œuvre dans un agglomérant organique résinoïde peut être une résine thermoplastique ou une résine thermodurcissable.

Plus particulièrement, la présente invention concerne un procédé de préparation d'un matériau abrasif comprenant des éléments abrasifs dans un liant, ledit procédé comprenant les étapes suivantes :
i) obtenir des éléments abrasifs suite à un procédé de récupération tel que précédemment défini ;
ii) mettre en contact les éléments abrasifs obtenus suite à l'étape (i) avec un liant ou un précurseur dudit liant et mélanger l'ensemble ;
iii) éventuellement soumettre le mélange obtenu suite à l'étape (ii) à un traitement thermique.

Tout ce qui a été précédemment expliqué pour le procédé de récupération d'éléments abrasifs s'applique *mutatis mutandis* à l'étape (i) du procédé de préparation selon l'invention.

Suite à l'étape (i) et préalablement à l'étape (ii), les éléments abrasifs récupérés peuvent être soumis à une ou plusieurs étape(s) de lavage et ce, notamment afin d'éliminer le ou les acides mis en œuvre dans la solution (S₁) ou (S₂). La ou les étape(s) de lavage est(sont) typiquement effectuée(s) dans un solvant polaire tel que de l'eau.

L'étape (ii) du procédé selon l'invention consiste à mélanger les éléments abrasifs avec soit un liant, soit un précurseur dudit liant. Par « précurseur d'un liant », on entend :
- un mélange de feldspath, d'argiles et de silice pour un agglomérant minéral vitrifiable ;
- un mélange de chlorure de magnésium et de magnésie pour un agglomérant minéral magnésien ; et
- un mélange de monomères, identiques ou différents, aptes à produire une résine ou un caoutchouc donné(e) par polymérisation respectivement pour un agglomérant organique résinoïde ou un agglomérant organique caoutchouc.

L'étape (iii) est optionnelle pour un matériau abrasif dont le liant est pour un agglomérant minéral magnésien.

Par contre, l'étape (iii) est une étape obligatoire pour opérer une transformation chimique du mélange obtenu suite à l'étape (ii) et aboutir au matériau abrasif recherché. A titre d'exemples, cette étape (iii) peut consister à soumettre, pendant au moins 24 h, à une température comprise entre 900°C et 1300°C, le mélange d'éléments abrasifs, de feldspath, d'argiles et de silice. Cette étape (iii) peut aussi consister en une vulcanisation à une température de l'ordre de 180°C (180°C ± 10°C) pour les matériaux abrasifs à base d'agglomérant organique caoutchouc.

Préalablement à l'étape (iii), le mélange obtenu suite à l'étape (ii) peut être soumis à une étape de pressage et/ou à une étape d'usinage. De la même façon, le produit obtenu suite à l'étape (iii) peut être soumis à une étape d'usinage.

La présente invention concerne également un procédé de préparation d'un matériau abrasif appliqué tel que précédemment défini.

Tout support habituellement utilisé dans le cadre des abrasifs appliqués est utilisable dans le cadre du procédé de préparation selon l'invention. Typiquement, ce support est notamment choisi dans le groupe constitué par du papier, une toile, une combinaison papier-toile, une fibre, un non tissé et des mailles.

De même, tout liant habituellement utilisé dans le cadre des abrasifs appliqués est utilisable dans le cadre du procédé de préparation selon l'invention. Typiquement, le liant mis en œuvre est choisi parmi les colles naturelles ou organiques comme les colles animales provenant de peaux ou de tendons et les résines synthétiques comme, par exemple, les résines urée-formaldéhyde, les résines phénol-formaldéhyde, les résines crésol-formaldéhyde et les résines xylénol-formaldéhyde.

Plus particulièrement, la présente invention concerne un procédé de préparation d'un matériau abrasif comprenant des éléments abrasifs sur un support, ledit procédé comprenant les étapes suivantes :
i') obtenir des éléments abrasifs suite à un procédé de récupération tel que précédemment défini ;
ii') déposer les éléments abrasifs obtenus suite à l'étape (i') sur un support présentant une couche d'un premier liant ;
iii') appliquer sur le support obtenu suite à l'étape (ii') une couche d'un second liant, identique ou différent audit premier liant.

Tout ce qui a été précédemment expliqué pour le procédé de récupération d'éléments abrasifs s'applique *mutatis mutandis* à l'étape (i') du procédé de préparation selon l'invention.

Suite à l'étape (i') et préalablement à l'étape (ii'), les éléments abrasifs récupérés peuvent être soumis à une ou plusieurs étape(s) de lavage et ce, notamment afin d'éliminer le ou les acides mis en œuvre dans la solution (S₁) ou (S₂). La ou les étape(s) de lavage est(sont) typiquement effectuée(s) dans un solvant polaire tel que de l'eau.

Le support obtenu suite à l'étape (ii') est un support sur lequel les éléments abrasifs adhérent à la couche du premier liant. La couche du second liant appliquée lors de l'étape (iii') permet d'ancrer les éléments abrasifs.

Suite à l'étape (ii') et/ou suite à l'étape (iii'), le support obtenu peut être soumis à une étape de séchage et éventuellement à une étape de cuisson.

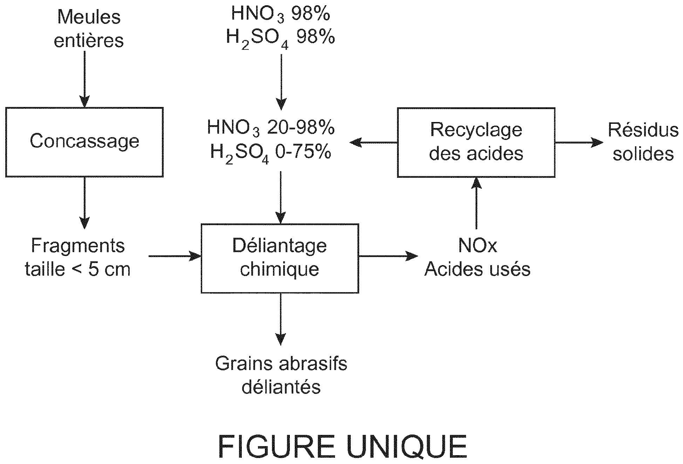

D'autres caractéristiques et avantages de la présente invention apparaîtront encore à l'homme du métier à la lecture des exemples ci-dessous donnés à titre illustratif et non limitatif, en référence à la figure unique annexée.

### BRÈVE DESCRIPTION DES DESSINS

La Figure unique présente une schématisation du procédé de récupération et de recyclage selon la présente invention.

### EXPOSÉ DÉTAILLÉ DE MODES DE RÉALISATION PARTICULIERS

### I. Procédé de récupération selon la présente invention.

En référence à la Figure unique, le procédé de récupération selon l'invention appliqué au recyclage de meules abrasives présente :
- une ou plusieurs étapes de concassage, selon la taille des meules à recycler, permettant d'obtenir des fragments de taille inférieur à 5 cm ;
- une étape d'oxydation à l'acide nitrique à des températures comprises entre la température ambiante et 150°C avec une solution aqueuse contenant de 20 à 98% d'acide nitrique et de 0 à 75% d'acide sulfurique ; et
- une étape de recyclage du solvant, sous forme d'oxydes d'azote et de mélange d'acides usagés qui peuvent contenir des composés organiques (produits de la dégradation des résines) et minéraux (charges minérales dissoutes).

### II. Exemples de mise en œuvre d'un procédé de récupération selon l'invention.

Différents types de matériaux abrasifs à liant de type résine phénol-formaldéhyde ont été recyclés par cette approche. Les charges abrasives des différents matériaux testés, les conditions opératoires et les résultats de ces essais sont répertoriés dans le Tableau 1 ci-après. A noter que, dans ce dernier, les compositions sont données en pourcentage massique.

**Tableau 1 Exemples de matériaux recyclés, de conditions opératoires et de performances.**

| **Matériau abrasif (M)** | **Masse de matériau M introduit** | **Volume de solvant** | **Température de réaction** | **Composition du solvant** (complément à 100% sous forme d'eau) | **Perte de masse (%) Masse de matériau M récupérée (g)** | **Rendement de dépolymérisation** |
|---|---|---|---|---|---|---|
| Corindon brun | 10,01 g | 60 mL | 130°C sous reflux -2 h | HNO₃ 68% | 33% 6,71g | 99,9% |
| Corindon brun | 10,14 g | 18 mL | 130°C sous reflux -2 h | HNO₃ 68% | 27% 7,36 g | 69% |
| Corindon brun | 10,01 g | 30 mL | 130°C sous reflux -2 h | HNO₃ 68% | 32% 6,77 g | 91% |
| | | | | | | |
| Corindon brun | 9,97 g | 46 mL | 130°C sous reflux -2 h | HNO₃ 68% | 34% 6,58 g | 99,9% |
| Corindon brun | 10,60 g | 60 mL | 130°C sous reflux -5 h | HNO₃ 68% | 33% 7,05 g | 99,8% |
| Corindon brun | 9,95 g | 60 mL | 130°C sous reflux -2 h | HNO₃ 68% | 29% 7,08 g | 99,2% |
| Corindon brun | 10,40 g | 55 mL | 130°C sous reflux -2 h | HNO₃ 34% | 20% 8,29 g | 40% |
| Corindon brun | 10,04 g | 60 mL | 130°C sous reflux -2 h | HNO₃ 23% H₂SO₄ 33% | 28% 7,27 g | 75% |
| Corindon brun | 972 g | 3500 mL | 90°C | HNO₃ 68% | 27% 710 g | 99,9% |
| Bauxite frittée | 13,02 g | 53 mL | 130°C sous reflux | HNO₃ 68% | 24% | |
| Mélange d'alumine solgel, de billes d'alumine et de corindons violets | 515 g | 750 mL | 77°C | HNO₃ 68% | 15% | 99,9% |
| Alumine sol-gel | 0,98 kg | 1250 mL | 80-85°C | HNO₃ 68% | 39% | 99,9% |
| Alumine sol gel pressée à froid | 9,48 g | 30 mL | 130°C sous reflux | HNO₃ 68% | 11% | 99,93% |
| Alumine frittée | 14,96 g | 40 mL | 130°C sous reflux | HNO₃ 68% | 33% | |
| Corindons violets | 146 g | 500 mL | 90°C | HNO₃ 68% | 45% 80,6 g | 99,86 % |

### III. Comparaison des performances de produits fabriqués à partir de grains neufs et recyclés selon le procédé de l'invention.

Des essais comparatifs de découpe ont été réalisés pour quantifier l'impact du recyclage sur les propriétés de découpe des grains abrasifs.

Ainsi dix disques de découpe à base de corindons bruns ont été fabriqués. Cinq ont été mis de côté, les cinq autres ont été « recyclés » selon le procédé de l'invention.

La composition des grains de corindons collectés/recyclés a, dans un premier temps, été comparée à celle de grains non recyclés (Tableau 2).

Dans un second temps, les grains recyclés ont été utilisés pour refaire cinq disques selon le même mode opératoire que les premiers. Les dix disques ont ensuite été utilisés pour des essais de découpe sur des pièces d'acier inoxydable dont les résultats sont répertoriés dans le Tableau 3 ci-après.

**Tableau 2 : Composition de corindons bruns ayant subi ou non un recyclage**

| **Nom** | **Grains de corindon originaux** | **Grains de corindon recyclés** |
|---|---|---|
| Al₂O₃ | 97,6 | 98,0 |
| SiO₂ | 0,49 | 0,31 |
| Fe₂O₃ | 0,20 | 0,16 |
| TiO₂ | 1,60 | 1,48 |
| CaO | 0,05 | 0,00 |
| MgO | 0,00 | 0,00 |
| K₂O | 0,00 | 0,00 |
| Na₂O | 0,00 | 0,00 |
| P₂O₅ | 0,01 | 0,01 |
| Cr₂O₃ | 0,00 | 0,00 |
| MnO | 0,00 | 0,00 |
| ZrO₂ | 0,16 | 0,15 |
| C | 0,18 | 0,07 |
| S | 0,04 | 0,04 |
| LOI | -0,10 | -0,06 |
| somme [% en masse] | 100,00 | 100,00 |

**Tableau 3 : Résultats des essais comparatifs de découpe**

| Disques | Eléments abrasifs neufs | Eléments abrasifs recyclés |
|---|---|---|
| Diamètre initial (mm) | 176,88 | 176,76 |
| Diamètre final (mm) | 173,73 | 173,88 |
| Usure (mm) | 3,15 | 2,88 |
| Surface d'usure (cm²) | 8,67 | 7,95 |
| Surface de découpe (cm²) | 3,13 | 3,13 |
| Nombre de découpes | 20 | 20 |
| Surface totale découpée (cm²) | 62,52 | 62,52 |
| G-Ratio | 7,30 | 7,26 |
| Alimentation (cm²/s) | 1,12 | 1,12 |
| Puissance (mA) | 17,12 | 17,73 |
| Performance (%) | 100,0 | 99,4 |

Les analyses FX ne montrent pas de différence notable quant à la composition entre les grains ayant subi un recyclage conformément au procédé selon la présente invention et les grains n'en ayant pas subi.

Par ailleurs, les essais comparatifs de découpe démontrent que les disques à tronçonner fabriqués à partir de grains de corindon recyclés ont des performances similaires à ceux fabriqués à partir de corindons neufs, avec notamment une différence de G-ratios, définis comme le rapport entre le volume de matériau ôté sur le volume d'abrasant usé, inférieure à 1%.

### RÉFÉRENCES

**[1]** Demande de brevet US 2003/032384 au nom de Noritake Co., Limited publiée le 23 février 2003 ;
**[2]** Demande internationale WO 96/20070 au nom de Schleifmittel-Werk Karl-Seiffert GmbH & Co. publiée le 4 juillet 1996 ;
**[3]** Demande internationale WO 2011/092021 au nom de Gottfried Wilhem Leibniz Universität Hannover publiée le 4 août 2011.

## Revendications

1. Procédé de récupération de tout ou partie des éléments abrasifs d'un matériau abrasif dans lequel lesdits éléments abrasifs sont maintenus dans une résine présentant au moins un groupement hydroxyle phénolique, ledit procédé étant **caractérisé en ce qu'**il comprend les étapes consistant à :
a) mettre en contact ledit matériau abrasif avec une solution aqueuse nitrique (S₁), moyennant quoi une solution aqueuse nitrique (S₂) contenant des éléments abrasifs et des résidus issus de la dégradation de ladite résine est obtenue ; puis
b) séparer les éléments abrasifs de la solution aqueuse nitrique (S₂) obtenue suite à ladite étape (a).

2. Procédé selon la revendication 1, **caractérisé en ce que** ladite résine est un phénoplaste.

3. Procédé selon la revendication 1 ou 2, **caractérisé en ce que** lesdits éléments abrasifs sont choisis dans le groupe constitué par l'alumine , les corindons bruns, les corindons blancs, les corindons violets, la zircone, le diamant, le carbure de silicium, la bauxite frittée et leurs mélanges.

4. Procédé selon l'une quelconque des revendications 1 à 3, **caractérisé en ce que** ladite solution aqueuse nitrique (S₁) contient au moins 20% en masse d'acide nitrique par rapport à la masse totale de ladite solution aqueuse nitrique (S₁).

5. Procédé selon l'une quelconque des revendications 1 à 4, **caractérisé en ce que** ladite solution aqueuse nitrique (S₁) contient en outre de l'acide sulfurique.

6. Procédé selon la revendication 5, **caractérisé en ce que** ladite solution aqueuse nitrique (S₁) contient au moins 30% en masse d'acide sulfurique par rapport à la masse totale de ladite solution aqueuse nitrique (S₁).

7. Procédé selon l'une quelconque des revendications 1 à 6, **caractérisé en ce que**, lors de ladite étape (a), la mise en contact est réalisée à une température comprise entre la température ambiante et 150°C.

8. Procédé selon l'une quelconque des revendications 1 à 7, **caractérisé en ce que**, préalablement à ladite étape (a), ledit matériau abrasif a subi un traitement du type broyage ou concassage.

9. Procédé selon l'une quelconque des revendications 1 à 8, **caractérisé en ce que** la solution d'acide nitrique (S₂) obtenue suite à ladite étape (b) est soumise à une étape supplémentaire de recyclage.

10. Procédé de préparation d'un matériau abrasif comprenant des éléments abrasifs dans un liant, ledit procédé comprenant les étapes suivantes :
i) obtenir des éléments abrasifs suite à un procédé de récupération tel que défini à l'une quelconque des revendications 1 à 9 ;
ii) mettre en contact les éléments abrasifs obtenus suite à ladite étape (i) avec un liant ou un précurseur dudit liant et mélanger l'ensemble ;
iii) éventuellement soumettre le mélange obtenu suite à ladite étape (ii) à un traitement thermique.

11. Procédé de préparation d'un matériau abrasif comprenant des éléments abrasifs sur un support, ledit procédé comprenant les étapes suivantes :
i') obtenir des éléments abrasifs suite à un procédé de récupération tel que défini à l'une quelconque des revendications 1 à 9 ;
ii') déposer les éléments abrasifs obtenus suite à ladite étape (i') sur un support présentant une couche d'un premier liant ;
iii') appliquer sur le support obtenu suite à ladite étape (ii') une couche d'un second liant, identique ou différent audit premier liant.

## Patentansprüche

1. Verfahren zur Rückgewinnung aller oder eines Teils der Abriebelemente aus einem Abriebmaterial, bei dem die Abriebelemente in einem Harz mit mindestens einer phenolischen Hydroxylgruppe gehalten werden, **dadurch gekennzeichnet, daß** das Verfahren die folgenden Schritte umfaßt: :
a) Kontaktieren des Abriebmaterials mit einer wässrigen Salpetersäurelösung (S₁), wodurch eine wässrige Salpetersäurelösung (S₂) erhalten wird, die Abriebelemente und Rückstände aus dem Abbau des Harzes enthält; und dann
b) Abtrennen der abrasiven Elemente von der wässrigen Salpetersäurelösung (S₂), die in Schritt (a) erhalten wurde.

2. Verfahren nach Anspruch 1, **dadurch gekennzeichnet, dass** das Harz ein Phenoplast ist.

3. Verfahren nach Anspruch 1 oder 2, dadurch gekenn-zeichnet, dass die Abriebelemente aus der Gruppe ausgewählt sind, die aus Aluminiumoxid, braunem Korund, weißem Korund, violettem Korund, Zirkoniumdioxid, Diamant, Siliciumcarbid, gesintertem Bauxit und Mischungen davon besteht.

4. Verfahren nach einem der Ansprüche 1 bis 3, **dadurch gekennzeichnet, daß** die wässrige Salpetersäurelösung (S₁) mindestens 20 Gew.-% Salpetersäure, bezogen auf das Gesamtgewicht der wässrigen Salpetersäurelösung (S₁), enthält.

5. Verfahren nach einem der Ansprüche 1 bis 4, **dadurch gekennzeichnet, daß** die wässrige Salpetersäurelösung (S₁) ferner Schwefel-säure enthält.

6. Verfahren nach Anspruch 5, **dadurch gekennzeichnet, daß** die wässrige Salpetersäurelösung (S₁) mindestens 30 Gew.-% Schwefelsäure, bezogen auf das Gesamtgewicht der wässrigen Salpetersäurelösung (S₁), enthält.

7. Verfahren nach einem der Ansprüche 1 bis 6, **dadurch gekennzeichnet, daß** während der Stufe (a) die Kontaktierung bei einer Temperatur zwischen Raumtemperatur und 150°C durchgeführt wird.

8. Verfahren nach einem der Ansprüche 1 bis 7, **dadurch gekennzeichnet, daß** das Abriebmaterial vor dem Schritt (a) einer Behandlung des Abrieb- oder Zerkleinerungstyps unterworfen worden ist.

9. Verfahren nach einem der Ansprüche 1 bis 8, **dadurch gekennzeichnet, daß** die als Ergebnis des Schrittes (b) erhaltene Salpeter-säurelösung (S₂) einem weiteren Recyclingschritt unterzogen wird.

10. Verfahren zur Herstellung eines Abriebmaterials, das Abriebelemente in einem Bindemittel umfasst, wobei das Verfahren die folgenden Schritte umfasst:
i) Gewinnung abrasiver Elemente durch ein Rück-gewinnungsverfahren, wie in einem der Ansprüche 1 bis 9 definiert;
ii) Inkontaktbringen der nach dem Schritt (i) erhaltenen Abriebelemente mit einem Bindemittel oder einem Vorläufer des Bindemittels und Mischen der Anordnung;
iii) gegebenenfalls Unterziehen der nach dem Schritt (ii) erhaltenen Mischung einer Wärmebehandlung.

11. Verfahren zur Herstellung eines Abriebmaterials, das Abriebelemente auf einem Träger umfasst, wobei das Verfahren die folgenden Schritte umfasst:
i') Gewinnung abrasiver Elemente durch ein Rückgewinnungs-verfahren gemäß einer Definition in einem der Ansprüche 1 bis 9;
ii') Abscheiden der nach dem Schritt (i') erhaltenen Abrieb-elemente auf einen Träger mit einer Schicht eines ersten Bindemittels;
iii') Aufbringen einer Schicht eines zweiten Bindemittels, das mit dem ersten Bindemittel identisch oder davon verschieden ist, auf den nach dem Schritt (ii') erhaltenen Träger.

## Claims

1. Process for recovery of all or some abrasive elements from an abrasive material in which said abrasive elements are held in a resin with at least one phenolic hydroxyl group, said process being **characterised in that** it includes steps consisting of:
a) bring said abrasive material into contact with an aqueous nitric solution (S₁), as a result of which an aqueous nitric solution (S₂) is obtained containing abrasive elements and residue derived from degradation of said resin; then
b) separate the abrasive elements from the aqueous nitric solution (S₂) obtained subsequent to said step (a).

2. Process according to claim 1, **characterised in that** said resin is a phenoplast.

3. Process according to claim 1 or 2, **characterised in that** said abrasive elements are chosen from the group consisting of alumina, brown corundums, white corundums, violet corundums, zirconia, diamond, silicon carbide, sintered bauxite and mixtures thereof.

4. Process according to any one of claims 1 to 3, **characterised in that** said aqueous nitric solution (S₁) contains at least 20% by mass of nitric acid relative to the total mass of said aqueous nitric solution (S₁).

5. Process according to any one of claims 1 to 4, **characterised in that** said aqueous nitric solution (S₁) also contains sulphuric acid.

6. Process according to claim 5, **characterised in that** said aqueous nitric solution (S₁) contains at least 30% by mass of sulphuric acid relative to the total mass of said aqueous nitric solution (S₁).

7. Process according to any one of claims 1 to 6, **characterised in that** during step (a), contact is made at a temperature comprised between ambient temperature and 150°C.

8. Process according to any one of claims 1 to 7, **characterised in that** before step (a), said abrasive material has undergone a grinding or crushing type treatment.

9. Process according to any one of claims 1 to 8, **characterised in that** the nitric acid solution (S₂) obtained after said step (b) is subjected to an additional recycling step.

10. Process for preparation of an abrasive material comprising abrasive elements in a binder, said process comprising the following steps:
i) obtain abrasive elements following a recovery process such as defined in any one of claims 1 to 9;
ii) bring the abrasive elements obtained in said step (i) into contact with a binder or a precursor of said binder and mix the assembly;
iii) possibly apply a heat treatment to the mixture obtained after said step (ii).

11. Process for preparation of an abrasive material comprising abrasive elements on a support, said process comprising the following steps:
i') obtain abrasive elements following a recovery process such as defined in any one of claims 1 to 9;
ii') deposit abrasive elements obtained after said step (i') on a support with a layer of a first binder;
iii') apply a layer of a second binder, identical to or different from said first binder, on the support obtained after said step (ii').
